# EUROPEAN PATENT SPECIFICATION

(11) **EP 2 228 802 B1**
(45) Date of publication and mention of the grant of the patent: **04.03.2015**
(21) Application number: 08859424.7
(22) Date of filing: 11.12.2008
(51) Int. Cl.: G01M 3/16, G21C 9/016, G21C 17/00, G21C 17/04, G21C 13/00

(54) **Nuclear reactor containment vessel with leakage-detecting floor**
Kernreaktorcontainment mit leckdetektierendem Boden
Enceinte de confinement de réacteur nucléaire avec fond de détection de fuites

(30) Priority: 12.12.2007 JP 2007321293
(43) Date of publication of application: 15.09.2010
(60) Divisional application: 13001159.6
(73) Proprietor: Kabushiki Kaisha Toshiba, Minato-ku Tokyo 105-8001 (JP)
(72) Inventor: AOKI, Kazuyoshi, Tokyo 105-8001 (JP); KURITA, Tomohisa, Tokyo 105-8001 (JP); TOBIMATSU, Toshimi, Tokyo 105-8001 (JP); KUBO, Shinji, Tokyo 105-8001 (JP); TAHARA, Mika, Tokyo 105-8001 (JP); HAMAZAKI, Ryoichi, Tokyo 105-8001 (JP); AKINAGA, Makoto, Tokyo 105-8001 (JP)
(74) Representative: Shindler, Nigel
(86) International application number: PCT/JP2008/003720
(87) International publication number: WO 2009/075113

(56) References cited:
- WO-A1-2007/099698
- JP-A- 2 067 993
- JP-A- 3 087 693
- JP-A- 54 162 095
- JP-A- 63 177 096
- JP-T- 2002 530 682
- JP-U- 58 046 199
- JP-U- 58 046 199
- JP-U- H02 113 195
- US-A- 5 889 830
- US-A1- 2002 044 622

## Description

### Technical Field

The present invention relates to a water leak detection floor located between a reactor pressure vessel and a molten core holding apparatus disposed below the reactor pressure vessel and also to a reactor containment vessel having such a water leak detection floor.

### Background Art

In a water cooled reactor, by rundown of water supply into a reactor pressure vessel or a rupture of piping connected to the reactor pressure vessel, a reactor water level may fall, a reactor core may be exposed above the water level and cooling may become insufficient. Supposing such a case, it is designed that a nuclear reactor is shut down automatically under a signal of low water level, the reactor core is covered and cooled by water injected by an emergency core cooling system (ECCS), and a core meltdown accident is prevented.

However, although it is a very low probability, it can be assumed that the above mentioned emergency core cooling system would not operate and any other devices for supplying water to the reactor core would not be available. Under such a condition, the reactor core would be exposed due to lowering of the reactor water level and cooling would be insufficient, fuel rod temperature would rise with decay heat generated continuously after shutdown of the nuclear reactor and the reactor core would meltdown eventually.

If such an accident occurs, the hot molten core (corium) would fall down to a lower part of the reactor pressure vessel, penetrate a lower head at bottom of the reactor pressure vessel and fall to a floor of reactor containment vessel. The corium heats concrete stretched on the containment vessel floor, and would react with the concrete and generate large quantity of non-condensable gas, such as carbon dioxide or hydrogen, while melting and eroding the concrete if temperature of contact surface is high. The generated non-condensable gas would pressurize and damage the reactor containment vessel and would damage a containment vessel boundary by melting erosion of concrete or reduce structure toughness of the containment vessel. As a result, the reaction of the corium and the concrete would result in a breakage of the containment vessel and there can arise a risk that a radioactive material in the containment vessel is emitted to the external environment.

In order to suppress such a reaction of core debris and concrete, it is necessary to cool the corium so that temperature of the surface of the concrete contacting with a bottom of the corium is below erosion temperature (1500K or less for typical concrete) or to avoid that the core debris contact directly with the concrete. For this purpose, various countermeasures have been proposed against occasions when the corium falls down. One of the countermeasures is an apparatus referred to as core catcher that is to be arranged on a floor surface located below a reactor pressure vessel to receive corium. For example, a molten core cooling apparatus described in the Patent Document 1 is known as such a core catcher.

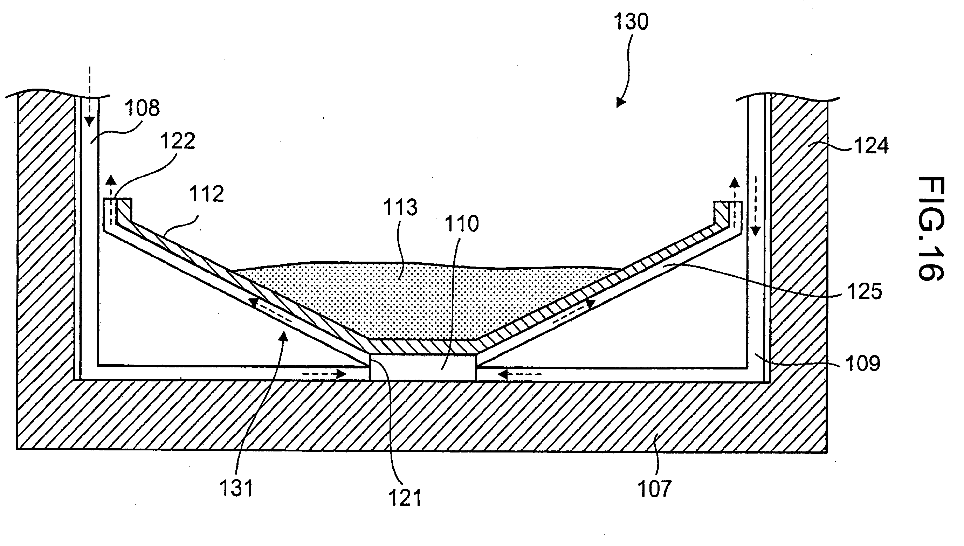

A molten core cooling apparatus will be described below by referring to drawings. FIG. 16 is a schematic longitudinal cross-sectional view of a molten core cooling apparatus.

Now, the configuration of the apparatus will be described below.

A molten core cooling device 130 is installed on a pedestal floor 107 below a reactor pressure vessel in a reactor containment vessel so as to be surrounded by a pedestal side wall 124. The molten core cooling apparatus 130 comprises a water supply chamber 110 at the center of the pedestal floor 107, a water injection piping 108 connected to the water supply chamber 110, a circulation piping 109 connected to the water supply chamber 110 and a water channel assembly 131 arranged so as to be connected to the water supply chamber 110. In FIG. 16, corium 113 that has fallen down from the reactor pressure vessel is deposited on the water channel assembly 131. The water channel assembly 131 includes cooling water flow paths 125 communicating with the water supply chamber 110 and the top surface sides of the cooling water flow paths 125 are formed by a heat-resistant material. Lower inlet sections 121 are arranged at the ends of the cooling water flow paths 125 connected to the water supply chamber 110, while upper outlet sections 122 are arranged at the other ends. One of the ends of the circulation piping 109 is open near the upper outlet section 122. Each arrow indicates a flow of water in the molten core cooling apparatus 130.

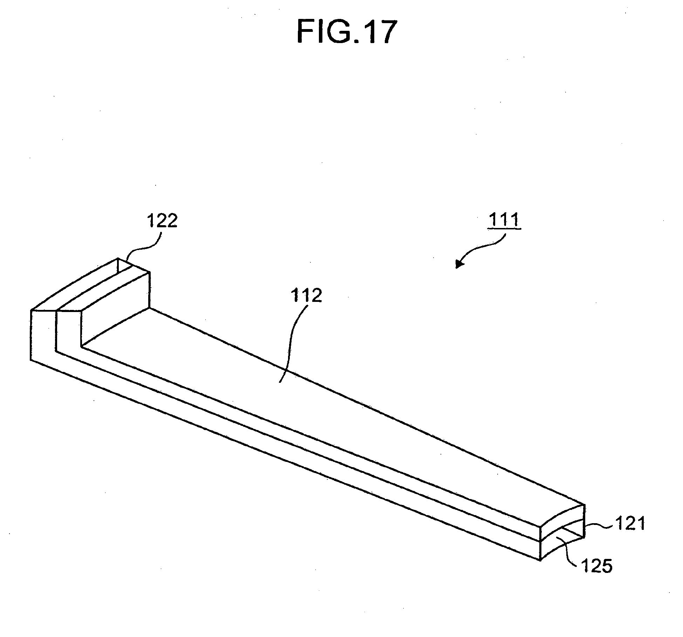

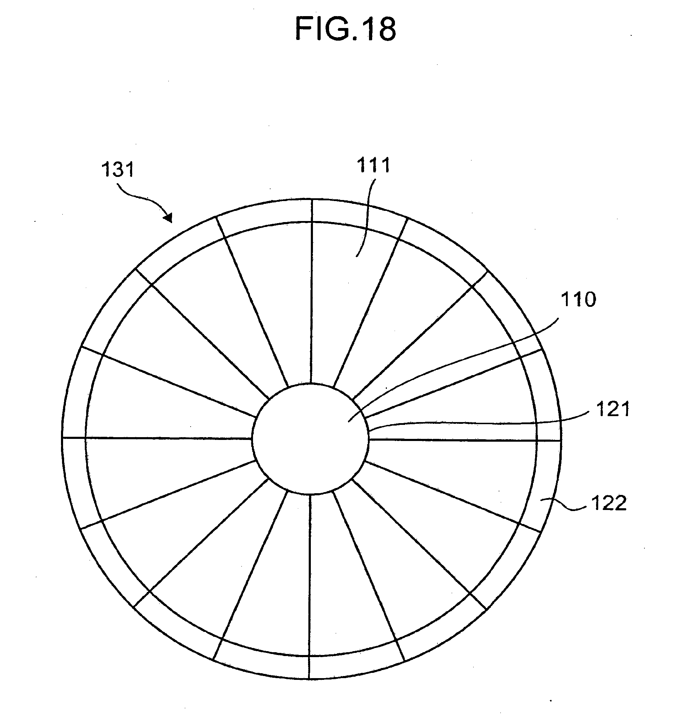

The configuration of the water channel assembly 131 will be described by referring to FIG. 17 and FIG. 18. FIG. 17 is a perspective view schematically illustrating a water channel for forming the water channel assembly 131 and FIG. 18 is a top view of the water channel assembly 131. A water channel 111 has a cooling water flow path 125 that is formed by an empty box and a heat-resistant material 112 that constitutes the top surface side of the cooling water flow path 125. The water channel assembly 131 Is formed by arranging a plurality of water channels 111 in a manner as shown in FIG. 18.

The function of this apparatus will be described below.

As the reactor pressure vessel is damaged and corium is ejected downward, the corium falls down onto the heat-resistant material 112 of the molten core cooling apparatus 130 and deposited there. The water injection piping 108 is connected to a pool arranged in the containment vessel and water in the pool is injected from the pool into the water supply chamber 110 by way of the water injection piping 108. The water fed to the water supply chamber 110 flows into the cooling water flow paths 125 from the lower inlet sections 121 of the cooling water channels 111 and then toward the upper outlet sections 122. The water in the cooling water flow paths 125 cools the corium 113 through the heat-resistant material 112 and subsequently overflows from the upper outlet sections 122 onto the deposited corium 113 to cool the corium 113 from the upper surface. Part of the water overflowing from the upper outlet sections 122 flows into the circulation piping 109 and returns to the water supply chamber 110. As described, it is prevented that pedestal floor 107 formed by concrete contacts with the corium 113, and additionally, the cooling efficiency is improved by cooling the corium 113 from the bottom surface and the upper surface.
Patent Document 1: Japanese Patent Application Publication 2007-232529)

The reader Is referred to JP58-046199U which is considered the closest prior art by the European Patent Office.

Attention is also drawn to US2002/0044622 which discloses an apparatus is described for catching and cooling a melt, in particular a core melt in a containment of a nuclear power plant. A porous body with which the melt comes into contact is provided. A pre-pressurized coolant is fed to the porous body so that the cavities in the porous body are filled with the coolant. After contact between the melt and the porous body, the pre-pressurized coolant penetrates into the melt and as a result leads to fragmentation, solidification and long-term cooling.

Another protection for a nuclear reactor housing is disclosed In JP3087693, the English language abstract of which reads as follows:

PURPOSE: To attain protection against the meltdown of a core by providing a structure which is arranged at the lower part of a reactor and cooling liquid, putting the cooling liquid partially in a chamber in the reactor building, and dipping the structure in the cooling liquid. CONSTITUTION: The nuclear reactor 10 is put in an upper chamber 12, an intermediate chamber 13, and a lower chamber 14. The chamber 14 contains the lower part of the nuclear reactor 10 and is equipped with a base part 15 and provided with two lower-side chambers 16 and 17 communicating with the chamber 14. The base part 15 of the chamber 14 is positioned corresponding to a basic floor 18 and the base part 15 contains the structure 19 formed of many layers of beams 20. The lower part of the chamber 14 including the base part 15, and the chambers 16 and 17 are filled with the cooling liquid 22 such as water containing boric acid and the structure 19 is dipped in the liquid 22. If the core of the reactor 10 melts down, a produced molten substance bores a hole in a pressure container 11 to fall into the liquid 22, and then moves down toward the structure 19 and is cooled.

Additional background art is discussed in JP02-113195.

### Disclosure of the Invention

### Problem to be Solved by the Invention

Conventionally, a water leak detector is installed on the pedestal floor 107 where a molten core cooling apparatus as described above is installed and monitors any water leak that takes place by detecting the falling water when water leaks from the reactor pressure vessel and/or the piping. However, once a molten core cooling apparatus as described above is installed, the molten core cooling apparatus receives the fallen water after a water leak takes place so that it cannot detect the water leak. Therefore, when a molten core cooling apparatus is installed, alternative water leak detection means needs to be installed instead of a conventional water leak detector.

Therefore, the object of the present invention is to provide a reactor containment vessel having a mechanism for detecting any water leak that takes place at the reactor pressure vessel or at the piping connected to the reactor pressure vessel that is compatible with a core catcher to be installed below a reactor pressure vessel to receive corium.

### Means for solving the problem

In order to achieve the object described above, there is provided a reactor containment according to claim 1.

### Advantage of the Invention

A reactor containment vessel according to the present invention can prevent contact of the molten core and the concrete by means of a core catcher without damaging the function of detecting any water leak at the reactor pressure vessel or at the piping connected to the reactor pressure vessel.

### Brief Description of the Drawings

FIG. 1 is a schematic longitudinal cross-sectional view of the reactor containment vessel according to Example 1 of the present disclosure.
FIG. 2 is an enlarged schematic longitudinal cross-sectional view of the molten core holding apparatus, illustrating a principal part thereof.
FIG. 3 is a schematic longitudinal cross-sectional view of the reactor containment vessel according to Example 2 of the present disclosure.
FIG. 4 is an enlarged schematic longitudinal cross-sectional view of an example modification of Example 2, which represents an embodiment of the present invention, illustrating a principal part thereof.
FIG. 5 is an enlarged schematic longitudinal cross-sectional view of another example modification of water leak detection floor according to Example 2, which represents a further embodiment of the present invention, illustrating a principal part thereof.
FIG. 6 is an enlarged schematic longitudinal cross-sectional view of yet another example modification of water leak detection floor according to Example 2, which represents a further embodiment of the present invention, illustrating a principal part thereof.
FIG. 7 is a schematic longitudinal cross-sectional view of an example modification of reactor containment vessel according to Example 2, which represents a further embodiment of the present invention.
FIG. 8 is an enlarged schematic longitudinal cross-sectional view of the water leak detection floor according to Example 3 of the present disclosure, illustrating a principal part thereof.
FIG. 9 is an enlarged schematic longitudinal cross-sectional view of an example modification of water leak detection floor according to Example 3, illustrating a principal part thereof.
FIG. 10 is an enlarged schematic longitudinal cross-sectional view of an example modification of water leak detection floor according to Example 3, illustrating a principal part thereof.
FIG. 11 is an enlarged schematic longitudinal cross-sectional view of another example modification of water leak detection floor according to Example 3, illustrating a principal part thereof.
FIG. 12 is an enlarged schematic longitudinal cross-sectional view of yet another example modification of water leak detection floor according to Example 3, illustrating a principal part thereof.
FIG. 13 is an enlarged schematic longitudinal cross-sectional view of yet another example modification of water leak detection floor according to Example 3, illustrating a principal part thereof.
FIG. 14 is an enlarged schematic longitudinal cross-sectional view of yet another example modification of water leak detection floor according to Example 3, illustrating a principal part thereof.
FIG. 15 is an enlarged schematic longitudinal cross-sectional view of water leak detection floor according to Example 4, illustrating a principal part thereof.
FIG. 16 is a schematic longitudinal cross-sectional view of a known molten core cooling apparatus.
FIG. 17 is a schematic perspective view of a water channel of the molten core cooling apparatus.
FIG. 18 is a top view of a water channel assembly of the molten core cooling apparatus.

### Explanation of Reference Symbols

1: reactor pressure vessel
2: reactor containment vessel
3: reactor core
4: suppression pool
5: cistern
6: cooling water tank
7: lower dry well
8: upper dry well
9: water injection piping
10: molten core holding apparatus
11: water leak detection floor
12: heat-resistant material layer
13: corium
14: water supply chamber
15: cooling water flow path
15a: upper end
16: support pillar
17: pump
18: circulation piping
21: pedestal floor
22: pedestal side wall
23: water injection valve
24: ventilation hole
25: standpipe
26: safety valve
27: cover
28: tray
29: pressure equalizing hole
30: thin floor section
31: working floor
32: holding floor
33: dam
34: hole section
35: temporary molten core holder
36: beam
41: cooler
42: steam suction pipe
43: condensed water return pipe
51: piping
107: pedestal floor
108: water injection piping
109: circulation piping
110: water supply chamber
111: water channel
112: heat-resistant material
113: corium
121: lower inlet section
122: upper outlet section
124: pedestal side wall
125: cooling water flow path
130: molten core cooling apparatus
131: water channel assembly

Now, examples of the present disclosure will be described by referring to the drawings.

### Example 1

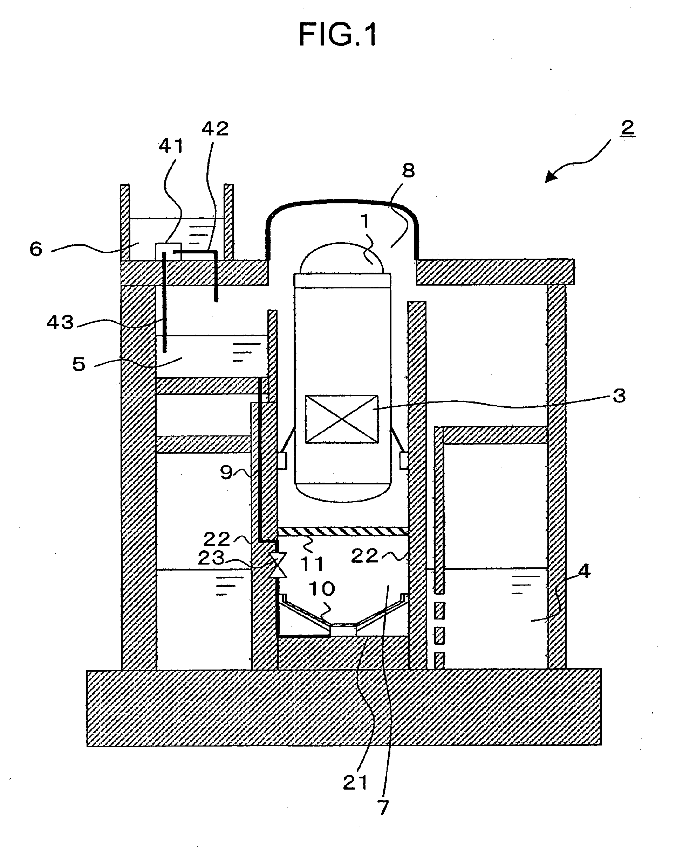

Example 1 of the present disclosure will be described by referring to FIG. 1. FIG. 1 is a schematic longitudinal cross-sectional view of the reactor containment vessel of this example.

A reactor pressure vessel 1 that contains a reactor core 3 is contained in a reactor containment vessel 2. The reactor containment vessel 2 has a suppression pool 4, a cistern 5, a cooling water tank 6 arranged higher than the cistern 5, a cooler 41 arranged in the water of the cooling water tank 6, a molten core holding apparatus 10 arranged on a pedestal floor 21 below the reactor pressure vessel 1, a pedestal side wall 22 standing from the pedestal floor 21 and surrounding the reactor pressure vessel 1 and a water leak detection floor 11 arranged between the reactor pressure vessel 1 and the molten core holding apparatus 10. The molten core holding apparatus is a core catcher for receiving molten core when a core meltdown accident occurs. Note that the cistern 5 is arranged at a higher position than the molten core holding apparatus 10. The water leak detection floor 11 is transversally suspended by the pedestal side wall 22 and separates an upper space and a lower space thereof to form an upper dry well 8 and a lower dry well 7.

The water leak detection floor 11 is provided with a water leak detection sensor (not shown in the figure) and detects that the water leak detection floor 11 receives water, if any, by means of this sensor. When a water leak occurs at the reactor pressure vessel 1 or the piping connected to reactor pressure vessel 1, the water leak detection floor 11 receives and detects the falling leak water. In this way, it is possible to detect the water leak that occurs at the reactor pressure vessel 1 or the piping by means of this water leak detection floor 11.

It is assumed that a conventional water leak detection sensor is applied here. For example, a sensor formed by arranging an electrode pair on an insulator may be used. A sensor having such an arrangement can detect leak water by monitoring the electric current value thereof because the electric current value changes remarkably when the electrode pair is electrically connected by water.

The cooler 41 has a steam suction pipe 42 and a condensed water return pipe 43. The cooler 41 draws in steam in the upper dry well 8 through the steam suction pipe 42, cools and condenses the steam by heat exchange with the water in the cooling water tank 6 and supplies the condensed water to the cistern 5 through the condensed water return pipe 43.

The molten core holding apparatus 10 is connected to the cistern 5 by a water injection piping 9 and, as the water injection valve 23 arranged in the water injection piping 9 is opened, water in the cistern 5 is fed to the molten core holding apparatus 10 by gravity.

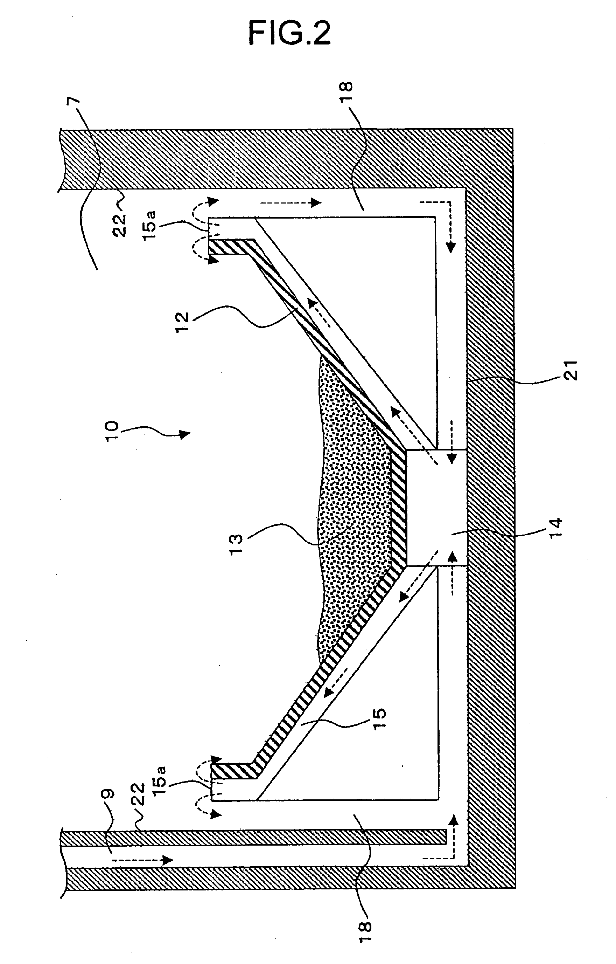

The configuration of the molten core holding apparatus 10 will be described in detail with FIG. 2. FIG. 2 is a schematic longitudinal cross-sectional view of the molten core holding apparatus 10 in a state of holding molten core (corium).

The top surface of the molten core holding apparatus 10 is formed by a heat-resistant material layer 12 and holds corium 13. A material that can withstand the temperature of the average melting point 2,200 degree-C of corium 13, for example, zirconia having a melting point of about 2,700 degree-C is employed for the heat-resistant material layer 12. Cooling water flow paths 15 where cooling water flows are arranged under the heat-resistant material layer 12. The cooling water flow paths 15 communicate with a water supply chamber 14 located at the center of the pedestal floor 21 and extend obliquely upwardly from the water supply chamber 14. The water injection piping 9 is connected to the water supply chamber 14. A circulation piping 18 is arranged adjacent to the top ends 15a of the cooling water flow paths 15 and the circulation piping 18 is connected to the water supply chamber 14. Note that the arrows of broken lines in FIG. 2 indicate the flow of water when water is injected into the molten core holding apparatus 10 to cool the molten core.

The function of this example will be described below.

When a water leak occurs at the reactor pressure vessel 1 or the piping connected to the reactor pressure vessel 1 in operation, leak water falls onto the water leak detection floor 11. The water leak detection floor 11 functions as water leak detection means as it receives and detects the fallen leak water.

Additionally, when a core meltdown accident occurs, corium falls down, passing through the bottom section of the reactor pressure vessel 1. The corium melts and penetrates the water leak detection floor 11 and the corium falls onto the molten core holding apparatus 10 in the lower dry well 7. As the reactor pressure vessel 1 is destroyed by corium is detected by a monitoring device (not shown in figures) of the reactor pressure vessel 1, the water injection valve 23 is opened and water is fed from the cistern 5 to the molten core holding apparatus 10 through the water injection piping 9. Water is fed to the cooling water flow paths 15 through the water supply chamber 14 to cool the corium 13 deposited on the heat-resistant material layer 12. Furthermore, water overflows from the top ends 15a of the cooling water flow paths 15 and flows onto the corium 13 to cool the corium 13. Additionally, part of the water overflowing from the cooling water flow paths 15 flows into the circulation piping 18 and is supplied to the water supply chamber 14. Water evaporated as a result of cooling the corium 13 escapes into the upper dry well 8 because the water leak detection floor 11 is damaged. Steam in the upper dry well 8 is fed to the cooler 41 through the steam suction pipe 42, condensed by the cooler 41, returned to the cistern 5 through the condensed water return pipe 43 and fed to the molten core holding apparatus 10 once again.

Thus, this example can prevent contact of the reactor containment vessel 2 formed by concrete and corium and monitor any water leak of the reactor pressure vessel 1 in operation as a result of arranging both of a molten core holding apparatus 10 that holds and cools corium in case of a core meltdown accident and a water leak detection floor 11 that functions as water leak detection means.

### Example 2

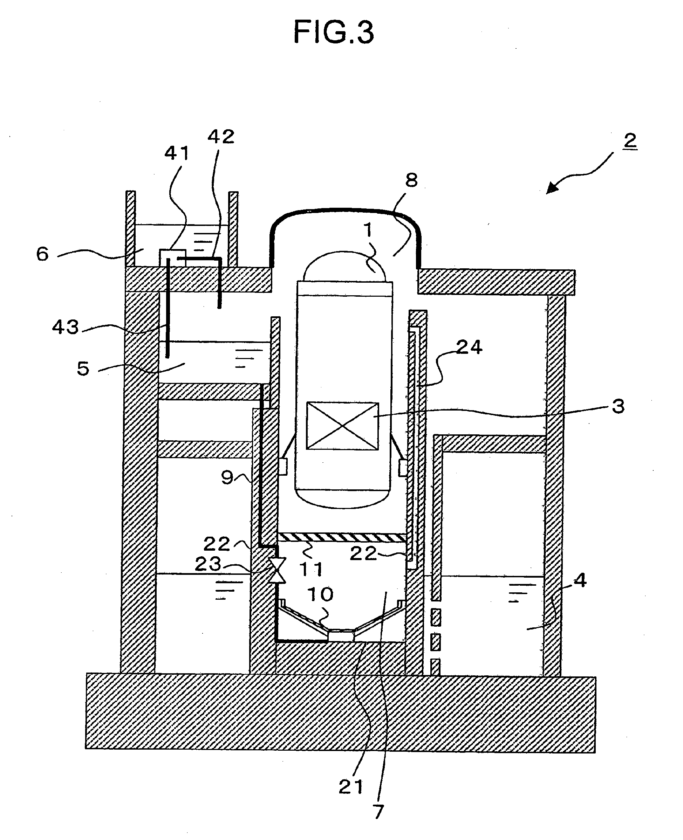

Example 2 of the present disclosure will be described by referring to FIG. 3. Note that the components similar to those of Example 1 are denoted by the same reference symbols and will not be described repeatedly.

FIG. 3 is a schematic longitudinal cross-sectional view of the reactor containment vessel 2 of this example. In this example, a ventilation hole 24 is arranged in the pedestal side wall 22 to make the lower dry well 7 and the upper dry well 8 communicate with each other.

The water leak detection floor 11 should be formed so as to be able to reliably receive and detect the falling leak water. While it may be simply an airtight floor separating between the lower dry well 7 and the reactor pressure vessel 1, the pressure in the lower dry well 7 rises when water is injected into the molten core holding apparatus 10, by operation error for example, if the water leak detection floor 11 is airtight. In this embodiment, the ventilation hole 24 that makes the lower dry well 7 and the upper dry well 8 communicate with each other functions as pressure equalizing means for releasing gas in the lower dry well 7 to the upper dry well 8 so that the pressure rise in the lower dry well 7 can be prevented when water is injected into the molten core holding apparatus in operation.

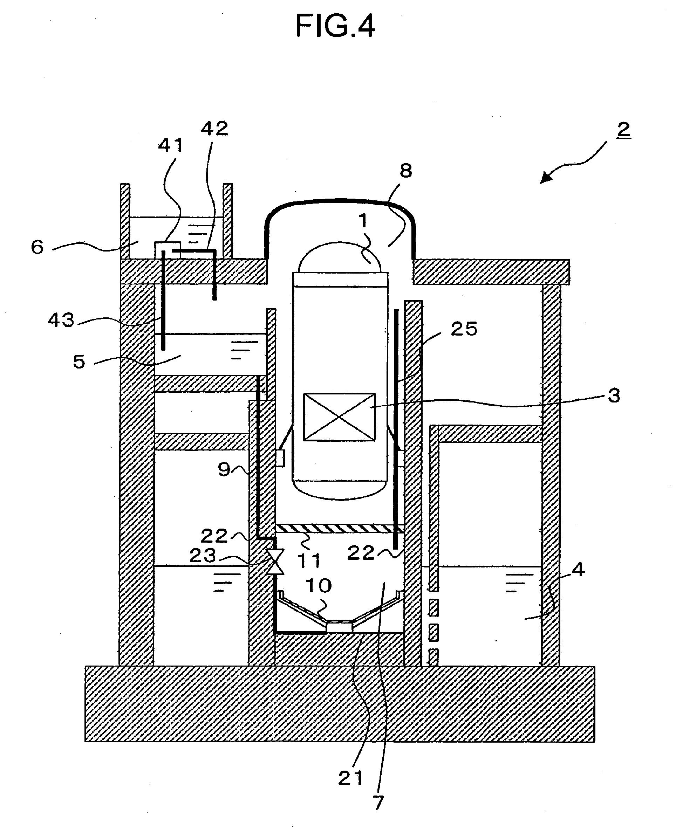

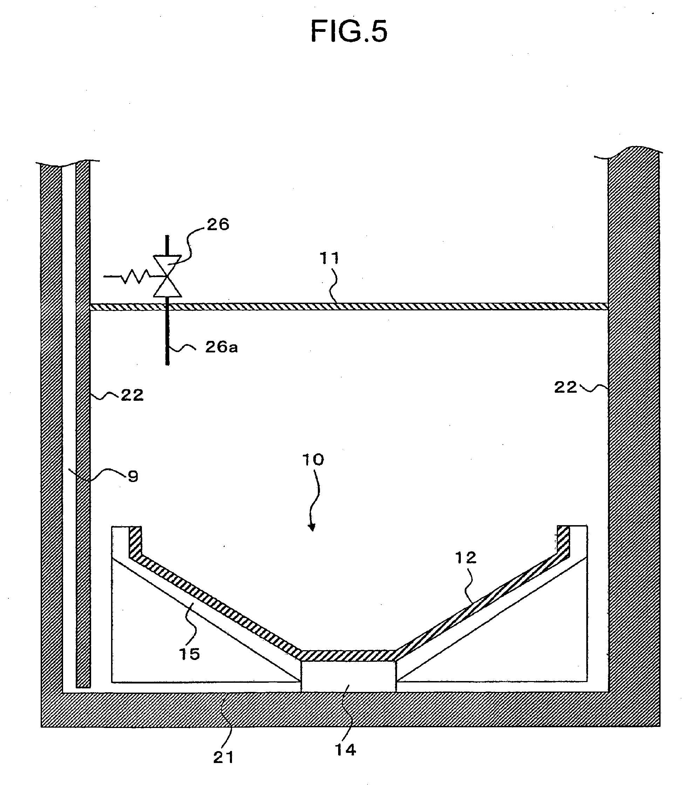

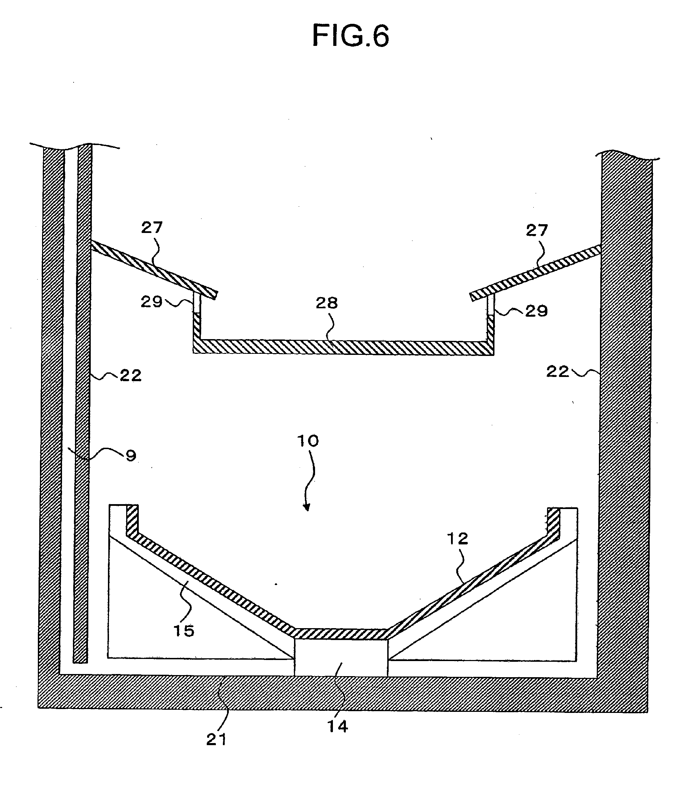

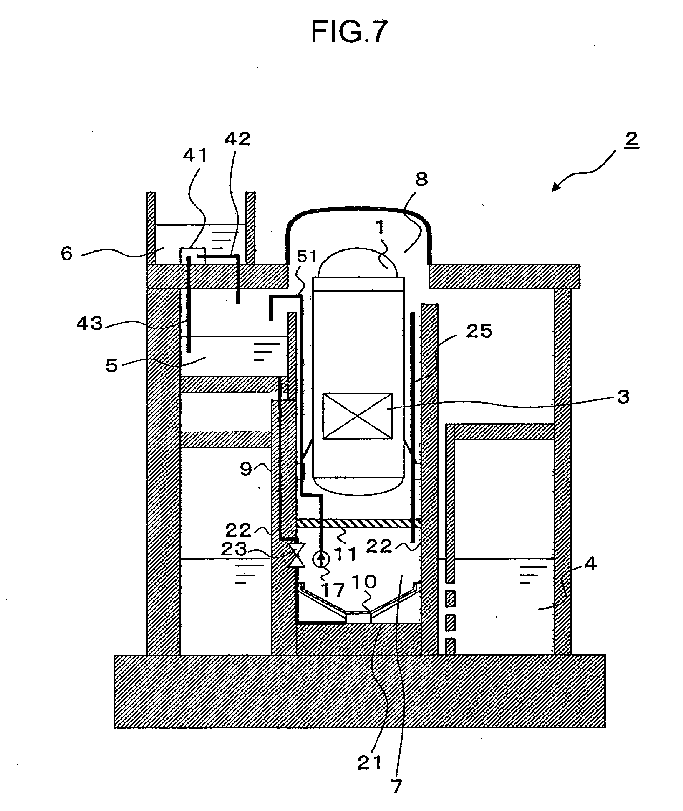

Example modifications of this example, which represent embodiments of the present invention, will be described by referring to FIG. 4, FIG. 5, FIG. 6 and FIG. 7 respectively. FIGS. 4 and 7 are schematic longitudinal cross-sectional views of the reactor containment vessel 2 of example modifications of this example. FIG. 5 and FIG. 6 are enlarged schematic longitudinal cross-sectional views of the lower dry wells 7 and their vicinities of the reactor containment vessels 2 of example modifications of this example.

In the example modification shown in FIG. 4, a hollow standpipe 25 extending through the water leak detection floor 11 is arranged as pressure equalizing means. The upper end of the standpipe 25 is located at a higher position than the water level of the cistern 5 and open. As water is injected into the molten core holding apparatus 10 from the cistern 5, the standpipe 25 functions as pressure equalizing means so that it can prevent pressure rise in the lower dry well 7. If the lower dry well 7 is fully filled with water and water is injected further, a water surface is formed in the standpipe 25 and the level of the water surface rises as water is injected. Since the end of the standpipe 25 is located at a higher position than the water level of the cistern 5 and open, the water level in the standpipe 25 rises to the height same as the water level of the cistern 5 and the injection of water is stopped.

If a core meltdown accident occurs in this state, the standpipe 25 collapses as the corium melts the water leak detection floor 11 and water in the standpipe 25 flows out into the lower dry well 7. The standpipe 25 may be so formed as to easily collapse in case of a core meltdown accident by using a low melting point material for the connecting part of the water leak detection floor 11 and the standpipe or for the standpipe 25 itself.

In the example modification shown in FIG. 5, a piping 26a is arranged so as to extend through the water leak detection floor 11 and the piping 26a is provided with a safety valve 26. As water is injected into the molten core holding apparatus 10 and the pressure in the lower dry well 7 rises as a result, the safety valve 26 is opened to release gas in the lower dry well 7 through the piping 26a to the upper dry well 8 so that pressure rise in the lower dry well 7 can be prevented. A one-way valve may be arranged instead of the safety valve 26. In such a case, the one-way valve is so arranged as to allow gas to pass from the lower dry well 7 to the upper dry well 8 but not allow gas to pass in the opposite direction.

In the example modification shown in FIG 6, the water leak detection floor 11 is formed by a tray 28 and a cover 27. The cover 27 is fixed to the pedestal side wall 22 of the lower dry well 7 and the tray 28 is arranged in a posture of being suspended from the cover 27. A pressure equalizing hole 29 is arranged at the part where the tray 28 is suspended from the cover 27. In case where water leaks from the reactor pressure vessel 1, leak water falls onto the cover 27 and subsequently onto the tray 28 or directly onto the tray 28. Therefore, the water leak can be detected by providing the tray 28 with a water leak detection function. When water is injected into the molten core holding apparatus 10, gas in the lower dry well 7 is released from the pressure equalizing hole 29 so that pressure rise in the lower dry well 7 can be prevented. Note that the cover 27 can be provided with a water leak detection function.

In the example modification shown in FIG. 7, the lower dry well 7 is provided with a pump 17 and a piping 51 extends from the pump 17 to the cistern 5 penetrating the water leak detection floor 11. When water is injected into the molten core holding apparatus 10 in normal operation, the pump 17 is started by an operation conducted at a control room and water in the lower dry well 7 is returned to the cistern 5 through the piping 51 to prevent pressure rise in the lower dry well 7.

As described above, this example provides advantages similar to those of the above described Example 1 and additionally can prevent pressure rise in the lower dry well 7 due to injection of water to the molten core holding apparatus 10 in a state where the soundness of the water leak detection floor 11 is secured by arranging a pressure equalizing means for the lower dry well 7 and the upper dry well 8.

### Example 3

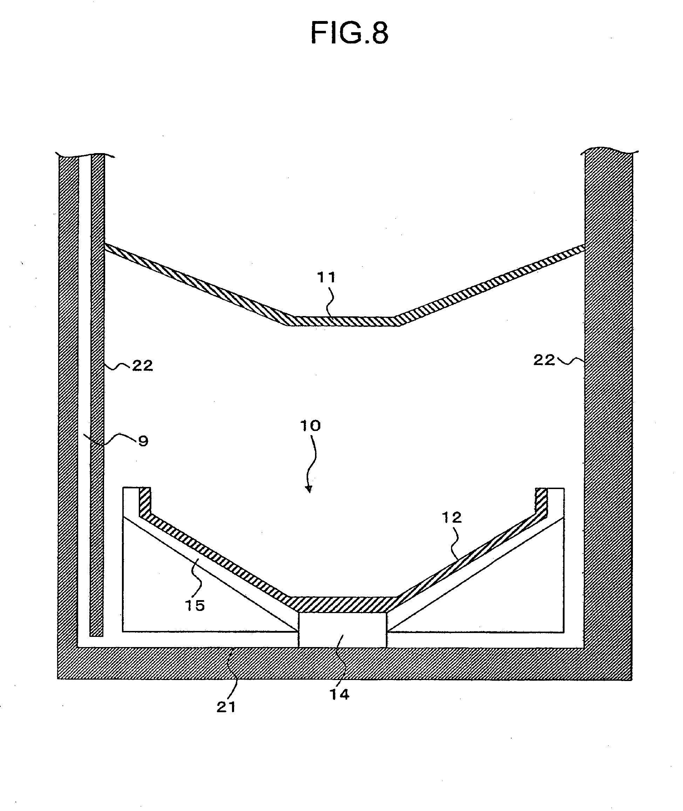

Example 3 of the present disclosure will be described by referring to FIG. 8. FIG. 8 is an enlarged schematic longitudinal cross-sectional view of a part of the reactor containment vessel 2 near the lower dry well 7 of this example. Note that the components similar to those of Example 1 are denoted by the same reference symbols and will not be described repeatedly. In this example, the water leak detection floor 11 has a shape of a mortar that has a slope downwardly tilted from the pedestal side wall 22 toward the center and the horizontal center.

Cooling from below of corium by the molten core holding apparatus 10 is thought to be dominantly by water in the peripheral cooling water flow paths 15 rather than at and around the center where the water supply chamber 14 is located in the medium term and the long term. Since the thicker heat-resistant material layer 12 causes the less heat exchange of water in the cooling water flow paths 15 and corium, the heat-resistant material layer 12 cannot be made so thick at the part where it contacts the cooling water flow paths 15. Therefore, the heat-resistant material layer 12 can be designed to be thick right above the water supply chamber 14 comparing with the part contacting with the cooling water flow paths 15 and hence its strength can be raised rather than at the periphery.

Since the water leak detection floor 11 has a shape of a mortar, corium is once gathered toward the center of the water leak detection floor 11 when the corium falls onto the water leak detection floor 11 as a result of that a core meltdown accident occurs. Thereafter, the corium melts the water leak detection floor 11 through and falls to the center and its vicinity of the molten core holding apparatus 10 where the strength is relatively high.

Therefore, this example provides advantages similar to those of the above described Example 1 and additionally the soundness of the molten core holding apparatus 10 can be improved because corium can be made to fall onto the center and its vicinity of the molten core holding apparatus 10 where the strength is relatively high as a result of that the water leak detection floor 11 has a shape of a mortar.

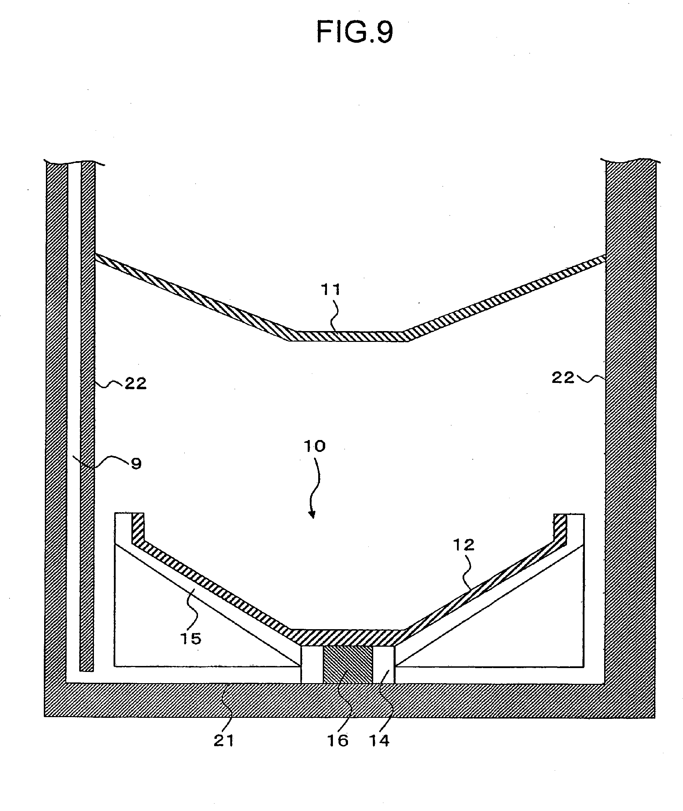

Example modification of this example will be described below by referring to FIG. 9, FIG. 10 and FIG. 11.

In the example modification shown in FIG. 9, a support pillar 16 for supporting the center of the molten core holding apparatus 10 is arranged in the water supply chamber 14. Due to the installation of the support pillar 16, the strength of the center of the molten core holding apparatus 10 can be increased further and the soundness thereof can be improved further.

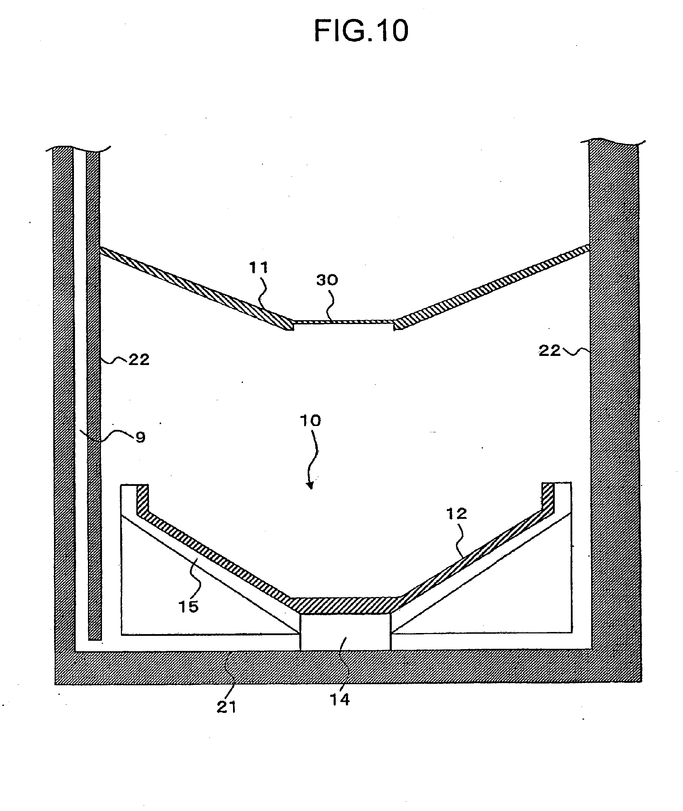

In the example modification shown in FIG. 10, the center of the water leak detection floor 11 is formed as a thin floor section 30. As the thin floor section 30 is formed at the center so as to be easily melted rather than the periphery, corium can easily fall onto the center of the molten core holding apparatus 10. A similar effect can be achieved so long as the center is made to be melted easily than the periphery, for example, by arranging a low melting point section at the center of the water leak detection floor 11, using a lower melting point material.

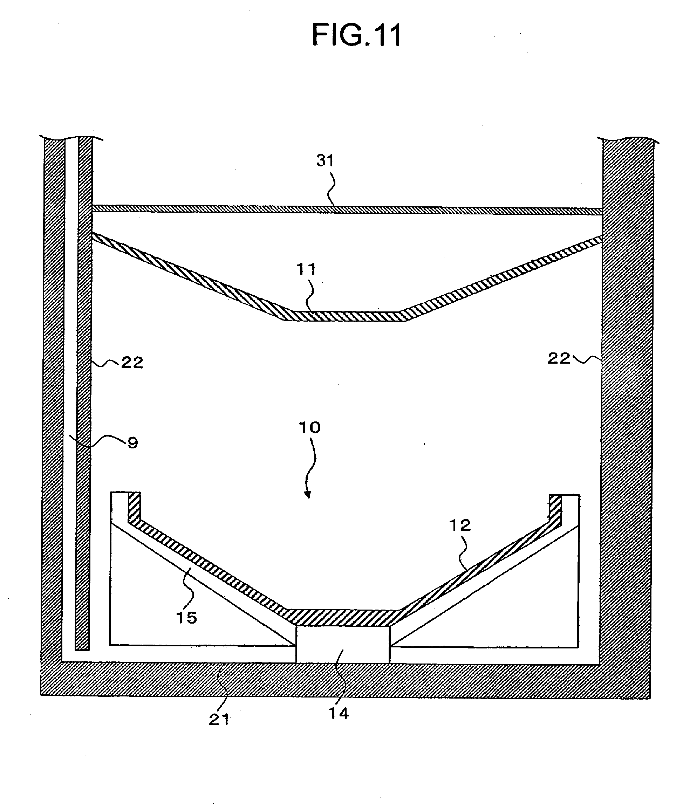

In the example modification shown in FIG. 11, a working floor 31 is arranged above the water leak detection floor 11 in addition to the arrangements of the embodiment and the example modifications shown in FIG. 8 through FIG. 11. Since the workability on the water leak detection floor 11 is reduced as a result of that the water leak detection floor 11 has a shape of a mortar, inspection and so on can be conducted more easily by additionally arranging a working floor 31. Since corium firstly falls onto the working floor 31 in case of a core meltdown accident, a porous material such as a punched plate, for example, is preferably employed for the working floor 31 in order to minimize the influence to the behavior of corium.

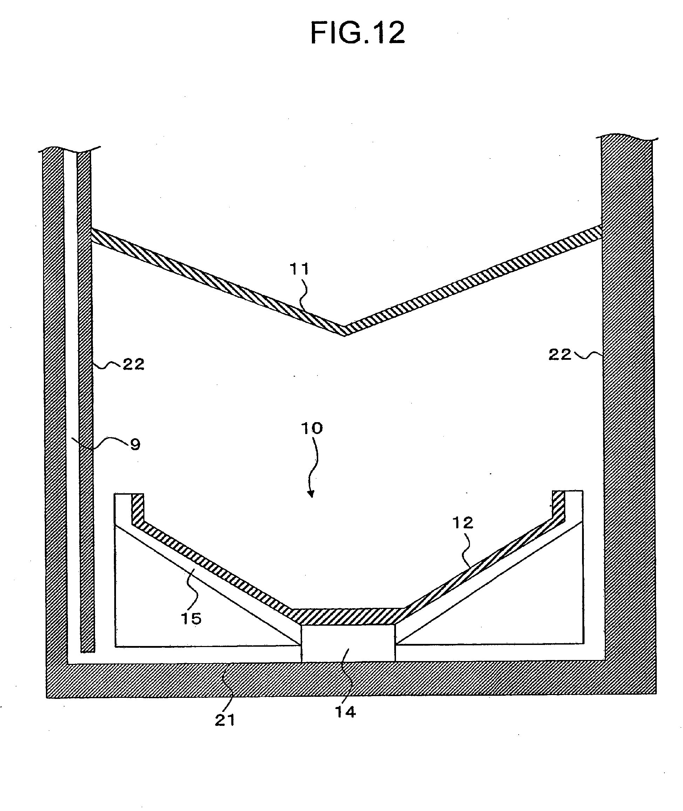

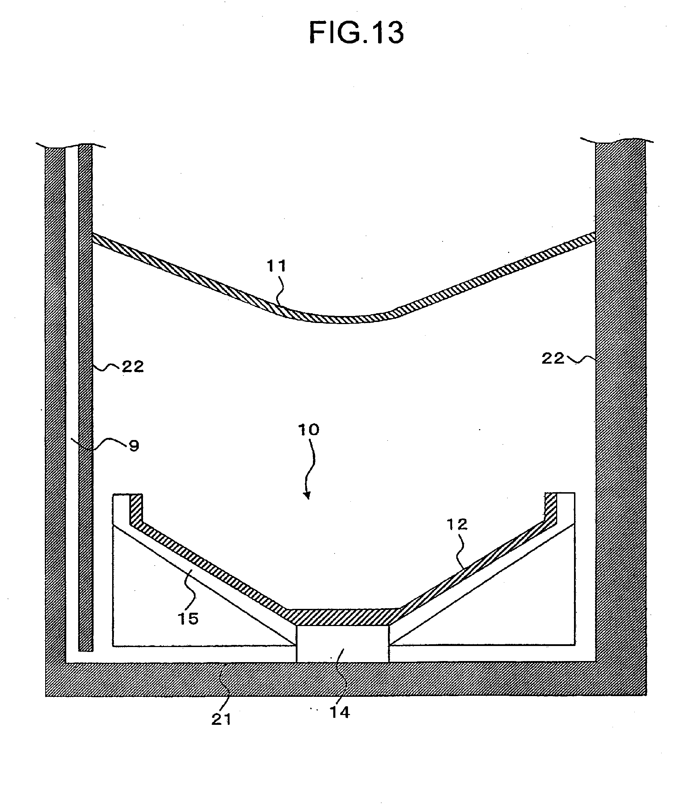

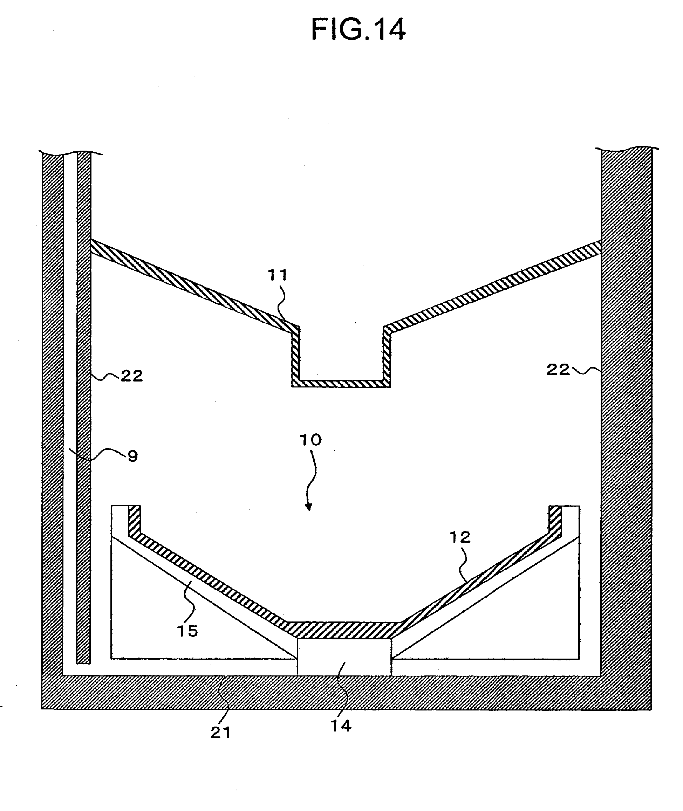

While the water leak detection floor 11 has a shape of a mortar at the center in the above description, it is sufficient that the water leak detection floor 11 has a shape of being downwardly tilted toward the center from the wall as a whole and, for example, a conical shape as shown in FIG. 12, a structure where the center and its vicinity has a curved surface as shown in FIG. 13 or a structure where the center and its vicinity is recessed as shown in FIG. 14 provide similar advantages.

### Example 4

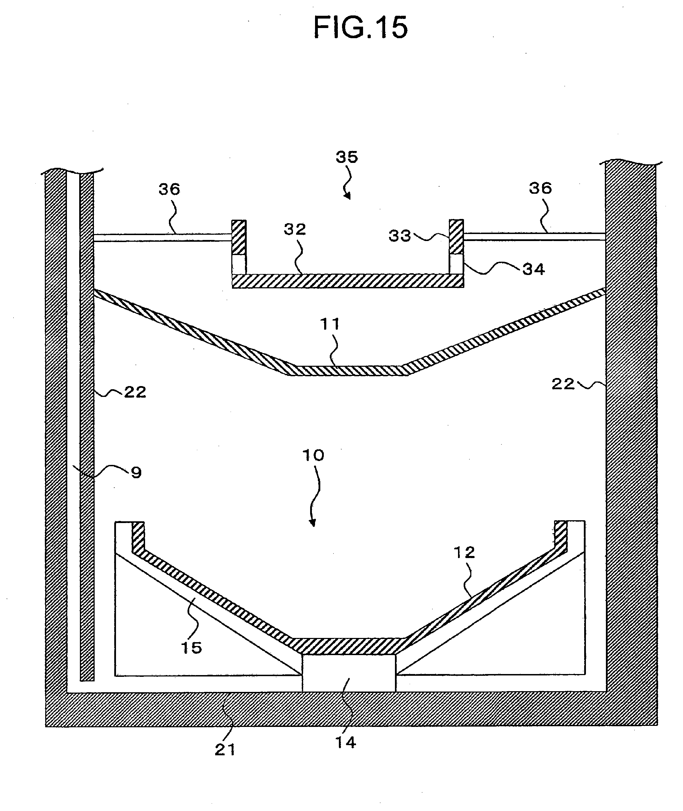

Example 4 of the present disclosure will be described by referring to FIG. 15. FIG. 15 is an enlarged schematic longitudinal cross-sectional view of a part of the reactor containment vessel 2 near the lower dry well 7 of this example. Note that the components similar to those of Example 3 are denoted by the same reference symbols and will not be described repeatedly.

In this example, a temporary molten core holder 35 is arranged above the water leak detection floor 11. The temporary molten core holder 35 includes a holding floor 32, a dam 33 and a hole section 34 formed in the dam 33 and is formed by a heat-resistant material. While the temporary molten core holder 35 is supported by a beam 36 fixed to the pedestal side wall 22 in this embodiment, it may alternatively be supported by a wire and so on.

Assuming that a core meltdown accident occurs and corium bursts out at high speed from the reactor pressure vessel 1, it is conceivable that corium immediately penetrates the water leak detection floor 11 and collides with the molten core holding apparatus 10 at high speed.

The temporary molten core holder 35 receives bursting out corium and prevents it from colliding with the molten core holding apparatus 10 at high speed. The temporary molten core holder 35 received corium by the holding floor 32 and prevent scattering of corium due to collision by the dam 33. Corium on the holding floor 32 flows out from the hole section 34 and falls onto the water leak detection floor 11. If the temporary molten core holder 35 is partly damaged by the collision, corium can be decelerated to a large extent as a result of the collision with the temporary molten core holder 35.

Thus, this example provides advantages similar to those of the above described Example 1 and additionally can enhance the soundness of the molten core holding apparatus 10.

## Claims

1. A reactor containment vessel (2) comprising:
a pedestal floor (21) formed below a space for placing a reactor pressure vessel (1), the reactor pressure vessel (1) containing a reactor core (3);
a pedestal side wall (22) standing on the pedestal floor (21) and surrounding the reactor pressure vessel (1);
a molten core holding apparatus (10) being configured to receive a molten core formed if the reactor core (3) melts;
a water leak detection floor (11) transversally suspended by the pedestal side wall (22) between the molten core holding apparatus (10) and the reactor pressure vessel(1) and defining an upper space and a lower space;
a lower dry well (7) being surrounded by a leakage detecting floor (11), the pedestal floor (21) and the pedestal wall (22);
a cistern (5) being placed at a higher position than the molten core holding apparatus (10); and
a water injection piping (9) connecting the cistern (5) and the molten core holding apparatus (10) and being configured to supply water in the cistern (5) to the molten core holding apparatus (10);
wherein the water leak detection floor (11) has pressure equalizing means for transferring gas in the lower dry well (7) to the upper space above the water leak detection floor (11) if a pressure of the lower dry well (7) rises above a pressure of the upper space of the leakage detecting floor (11).

2. The reactor containment vessel (2) of claim 1, wherein the pressure equalizing means is a stand pipe (25) penetrating the water leak detection floor (11) and having an opening above a water level of the cistern (5).

3. A rector containment vessel (2) of claim 1, wherein the pressure equalizing means has a pipe (26a) connecting the upper space and the lower space of the leakage detecting floor (11), and one of a safety valve (26) and a one-way valve arranged in the pipe (26a).

4. A reactor containment vessel (2) of any one of claim 1 to claim 4, wherein the water leak detection floor (11) has a slope downwardly tilted from the pedestal side wall (22) to a center thereof.

5. A reactor containment vessel (2) of claim 5, wherein the water leak detection floor (11) has an outer body and an inner body (30), the outer body being connected to the pedestal side wall (22), the inner body (30) being surrounded by the outer body and thinner than the outer body.

6. A reactor containment vessel (2) of claim 5, wherein the leakage detecting floor (11) has a outer body and a inner body, the outer body being connected to the pedestal side wall (22), the inner body being surrounded by the outer body and being made of a material having a lower melting point than the outer body.

7. A reactor containment vessel (2) of any one of claim 1 to claim 7, further comprising a temporary molten core holder (35) being placed between the water leak detection floor (11) and the reactor pressure vessel (1) and being made of a heat-resistant material (112).

8. A reactor containment vessel (2) of any one of claim 1 to claim 8, wherein the molten core holding apparatus (10) has a water supply chamber (14), a heat-resistant layer (12) and a support rod (16) and defines a coolant flow path (15), the water supply chamber (14) being connected to the water Injection piping (9), the coolant flow path (15) extending radially obliquely upwardly from the water supply chamber (14), the support rod (16) being placed in the water supply chamber (14) and supporting the heat-resistant layer (12).

9. A reactor containment vessel (2) of any one of claim 6 to claim 8, further comprising a working floor (31) being placed between the leakage detecting floor (11) and the reactor pressure vessel (1).

## Patentansprüche

1. Reaktorsicherheitsbehälter (2) umfassend:
einen Unterbauboden (21), der unterhalb eines Raumes zum Aufnehmen eines Reaktordruckbehälters (1) ausgebildet ist, wobei der Reaktorbehälter (1) eine Reaktorkern (3) beinhaltet;
eine Unterbauseitenwand (22), die auf dem Unterbauboden (21) steht und den Reaktordruckbehälter (1) umschließt;
eine Haltevorrichtung (10) für einen geschmolzenen Kern, welche derart ausgebildet ist, dass sie einen geschmolzenen Kern aufnimmt, der gebildet wird, wenn der Reaktorkern (3) schmilzt;
einen Wasserleckerfassungsboden (11), welcher quer getragen wird durch die Unterbauseitenwand (22) zwischen der Haltevorrichtung (10) für den geschmolzenen Kern und dem Reaktordruckbehälter (1) und welcher einen oberen Raum und einen unteren Raum begrenzt;
einen unteren Außenraum (7), der durch den Wasserleckerfassungsboden (11), den Unterbauboden (21) und die Unterbauwand (22) umschlossen wird;
eine Zisterne (5), die an einer höheren Position als die Haltevorrichtung (10) für den geschmolzenen Kern positioniert ist; und
eine Wassereinspritzleitung (9), welche die Zisterne (5) und die Haltevorrichtung (10) für den geschmolzenen Kern verbindet und derart ausgeführt ist, dass sie Wasser aus der Zisterne (5) in die Haltevorrichtung (10) für den geschmolzenen Kern zuführt;
wobei der Wasserleckerfassungsboden (11) ein Druckausgleichsmittel zum Übertragen von Gas in dem unteren Außenraum (7) zu dem oberen Raum oberhalb des Wasserleckerfassungsbodens (11) aufweist, wenn ein Druck des unteren Außenraumes (7) ansteigt über einen Druck des oberen Raumes des Wasserleckerfassungsbodens (11).

2. Der Reaktorsicherheitsbehälter (2) aus Anspruch 1, wobei das Druckausgleichsmittel ein Standrohr (25) ist, welches den Wasserleckerfassungsboden (11) durchdringt und eine Öffnung oberhalb eines Wasserpegels der Zisterne (5) aufweist.

3. Ein Reaktorsicherheitsbehälter (2) aus Anspruch 1, wobei das Druckausgleichsmittel ein Rohr (26a) aufweist, welches den oberen Raum und den unteren Raum des Wasserleckerfassungsbodens (11) verbindet, und ferner ein Sicherheitsventil (26) oder ein Rückschlagventil, das in dem Rohr (26a) angeordnet ist.

4. Ein Reaktorsicherheitsbehälter (2) aus einem der Ansprüche 1 bis 4, wobei der Wasserleckerfassungsboden (11) ein Gefälle aufweist, das von der Unterbauseitenwand (22) zu einer Mitte derselben nach unten geneigt ist.

5. Ein Reaktorsicherheitsbehälter (2) aus Anspruch 5, wobei der Wasserleckerfassungsboden (11) ein Außenteil und ein Innenteil (30) aufweist, wobei der Außenteil an der Unterbauseitenwand (22) angeschlossen ist und der Innenteil (30) durch den Außenteil umschlossen wird und dünner ist als der Außenteil.

6. Ein Reaktorsicherheitsbehälter (2) aus Anspruch 5, wobei der Wasserleckerfassungsboden (11) ein Außenteil und ein Innenteil aufweist, wobei der Außenteil an der Unterbauseitenwand (22) angeschlossen ist, der Innenteil durch den Außenteil umschlossen wird und aus einem Material hergestellt ist, das einen niedrigeren Schmelzpunkt als der Außenteil aufweist.

7. Ein Reaktorsicherheitsbehälter (2) aus einem der Ansprüche 1 bis 7, ferner umfassend einen Halter (35) zum temporären Halten des geschmolzenen Kerns, wobei der Halter zwischen dem Wasserleckerfassungsboden (11) und dem Reaktordruckbehälter (1) positioniert ist und aus einem hitzebeständigen Werkstoff (112) hergestellt ist.

8. Ein Reaktorsicherheitsbehälter (2) aus einem der Ansprüche 1 bis 8, wobei die Haltevorrichtung (10) für den geschmolzenen Kern eine Wasserversorgungskammer (14), eine hitzebeständige Schicht (12) und eine Tragstange (16) aufweist und einen Kühlmittelströmungsweg (15) bildet, die Wasserversorgungskammer (14) mit der Wassereinspritzleitung (9) verbunden ist, sich der Kühlmittelströmungsweg (15) radial schräg nach oben von der Wasserversorgungskammer (14) aus erstreckt, die Tragstange (16) in der Wasserversorgungskammer (14) positioniert ist und die hitzebeständige Schicht (12) trägt.

9. Ein Reaktorsicherheitsbehälter (2) aus einem der Ansprüche 6 bis 8, ferner umfassend einen Arbeitsboden (31), der zwischen dem Leckageerfassungsboden (11) und dem Reaktordruckbehälter (1) positioniert ist.

## Revendications

1. Enceinte de confinement de réacteur (2) comprenant :
un plancher de support (21) formé en dessous d'un espace destiné à placer une enceinte sous pression de réacteur (1), l'enceinte sous pression de réacteur (1) contenant un coeur de réacteur (3),
une paroi latérale de support (22) reposant sur le plancher de support (21) et entourant l'enceinte sous pression de réacteur (1),
un équipement de retenue de coeur fondu (10) configuré pour recevoir un coeur fondu si le coeur de réacteur (3) fond,
un plancher de détection de fuite d'eau (11) suspendu transversalement au moyen de la paroi latérale de support (22) entre l'équipement de retenue de coeur fondu (10) et l'enceinte sous pression de réacteur (1) et définissant un espace supérieur et un espace inférieur,
une enceinte sèche inférieure (7) entourée par un plancher de détection de fuite (11), le plancher de support (21) et la paroi de support (22),
une citerne (5) placée à une position plus haute que l'équipement de retenue de coeur fondu (10), et
une tuyauterie d'injection d'eau (9) connectant la citerne (5) et l'équipement de retenue de coeur fondu (10) et étant configurée pour fournir l'eau dans la citerne (5) à l'équipement de retenue de coeur fondu (10),
dans laquelle le plancher de détection de fuite d'eau (11) possède un moyen d'égalisation de la pression destiné à transférer du gaz dans l'enceinte sèche inférieure (7) vers l'espace supérieur au-dessus du plancher de détection de fuite d'eau (11) si une pression de l'enceinte sèche inférieure (7) augmente au-dessus d'une pression de l'espace supérieur du plancher de détection de fuite (11).

2. Enceinte de confinement de réacteur (2) selon la revendication 1, dans laquelle le moyen d'égalisation de la pression est un tube montant (25) pénétrant le plancher de détection de fuite d'eau (11) et ayant une ouverture au-dessus d'un niveau d'eau de la citerne (5).

3. Enceinte de confinement de réacteur (2) selon la revendication 1, dans laquelle le moyen d'égalisation de la pression possède un tube (26a) connectant l'espace supérieur et l'espace inférieure du plancher de détection de fuite (11), et l'un d'une soupape de sûreté (26) et d'un clapet anti-retour disposé dans le tube (26a).

4. Enceinte de confinement de réacteur (2) selon l'une quelconque des revendications 1 à 4, dans laquelle le plancher de détection de fuite d'eau (11) possède une pente inclinée vers le bas à partir de la paroi latérale de support (22) vers un centre de celui-ci.

5. Enceinte de confinement de réacteur (2) selon la revendication 5, dans laquelle le plancher de détection de fuite d'eau (11) possède un corps extérieur et un corps intérieur (30), le corps extérieur étant connecté à la paroi latérale de support (22), le corps intérieur (30) étant entouré par le corps extérieur et étant plus mince que le corps extérieur.

6. Enceinte de confinement de réacteur (2) selon la revendication 5, dans laquelle le plancher de détection de fuite (11) possède un corps extérieur et un corps intérieur, le corps extérieur étant connecté à la paroi latérale de support (22), le corps intérieur étant entouré par le corps extérieur et étant constitué d'un matériau ayant un point de fusion plus bas que celui du corps extérieur.

7. Enceinte de confinement de réacteur (2) selon l'une quelconque des revendications 1 à 7, comprenant en outre un récipient pour coeur fondu temporaire (35) placé entre le plancher de détection de fuite d'eau (11) et l'enceinte sous pression de réacteur (1) et étant constitué d'un matériau résistant à la chaleur (112).

8. Enceinte de confinement de réacteur (2) selon l'une quelconque des revendications 1 à 8, dans laquelle l'équipement de retenue de coeur fondu (10) possède une chambre d'alimentation en eau (14), une couche résistante à la chaleur (12) et une tige de support (16) et définit un trajet d'écoulement de réfrigérant (15), la chambre d'alimentation en eau (14) étant connectée à la tuyauterie d'injection d'eau (9), le trajet d'écoulement de réfrigérant (15) s'étendant radialement de manière oblique vers le haut depuis la chambre d'alimentation en eau (14), la tige de support (16) étant placée dans la chambre d'alimentation en eau (14) et supportant la couche résistante à la chaleur (12).

9. Enceinte de confinement de réacteur (2) selon l'une quelconque des revendications 6 à 8, comprenant en outre un plancher de travail (31) placé entre le plancher de détection de fuite (11) et l'enceinte sous pression de réacteur (1).
